# EUROPEAN PATENT APPLICATION

(11) **EP 2 031 350 A1**
(43) Date of publication of application: **04.03.2009**
(21) Application number: 08163014.7
(22) Date of filing: 26.08.2008
(51) Int. Cl.: G01C 21/00, G08G 5/04

(54) **Methods, systems, and apparatus for routing a vehicle to avoid an adverse condition**

(30) Priority: 30.08.2007 US 848042
(71) Applicant: Honeywell International Inc., Morristown, NJ 07962 (US)
(72) Inventor: Das, Sanjib K., IN Subbaspalli, Siliguri, WB (IN)
(74) Representative: Buckley, Guy Julian

(57) **Abstract**

Methods, systems, and apparatus are provided for generating a route to a destination for a vehicle to travel to avoid an adverse condition. One method includes defining a boundary of the adverse condition and identifying a plurality of reference points between a present location of the vehicle and the destination. The method also includes automatically generating a plurality of routes from the present location to the destination, each of the plurality of routes including a reference point, and providing one of the plurality of routes to a user. A system includes means for performing the steps of the above method. One apparatus includes a sequence of instructions which, when executed by a computing device, cause the computing device to perform the steps of the above method.

## Description

### TECHNICAL FIELD

The present invention generally relates to navigational aids, and more particularly relates to methods, systems, and apparatus for automatically generating one or more vehicle travel routes in response to an adverse condition.

### BACKGROUND

Currently, when adverse conditions (e.g., inclement weather, turbulence, traffic, rough seas, etc.) exist, a person (e.g., pilot, driver, captain, air traffic controller, etc.) generally analyzes along a travel route information provided by various instruments to determine a vehicle travel route to avoid the adverse condition. The analysis of the information from the various instruments is sometimes a difficult task, which in turn, may potentially distract the person for extended periods of time during such analysis.

Accordingly, it is desirable to provide methods, systems, and apparatus for automatically routing a vehicle in response to adverse conditions along a travel route. Furthermore, other desirable features and characteristics of the present invention will become apparent from the subsequent detailed description of the invention and the appended claims, taken in conjunction with the accompanying drawings and this background of the invention.

### BRIEF SUMMARY

Methods are provided for routing a vehicle to its destination in response to an adverse condition. One method comprises the steps of defining a boundary of the adverse condition and identifying a plurality of reference points between a present location of the vehicle and the destination. The method also includes the steps of automatically generating a plurality of routes from the present location to the destination and providing a first route of the plurality of routes to a user, wherein each of the plurality of routes includes a reference point.

Various embodiments also provide a system for routing a vehicle to its destination in response to an adverse condition. A system comprises means for defining a boundary of the adverse condition and means for identifying a plurality of reference points between a present location of the vehicle and the destination. Furthermore, the system includes means for automatically generating a plurality of routes including a first reference point from the present location to the destination and means for providing a first route of the plurality of routes to a user, wherein the first route does not include a second reference point within the boundary of the adverse condition.

Apparatus having stored thereon a sequence of instructions which, when executed by a computing device, cause the computing device to perform a method for routing a vehicle to its destination in response to an adverse condition are also provided. One apparatus has instructions which cause the processor to define a boundary of an adverse condition and identify a plurality of reference points between a present location of a vehicle and a destination for the vehicle. The instructions also cause the processor to automatically determine a plurality of routes from the present location to the destination, each of the plurality of routes including a reference point, and display a first route of the plurality of routes to a user.

### BRIEF DESCRIPTION OF THE DRAWINGS

The present invention will hereinafter be described in conjunction with the following drawing figures, wherein like numerals denote like elements, and

FIG. 1 is a block diagram of one exemplary embodiment of a system for routing a vehicle in response to an adverse condition;

FIG. 2 is a schematic diagram illustrating one exemplary embodiment of a map including a plurality of routes to a destination in response to an adverse condition;

FIG. 3 is a schematic diagram illustrating another exemplary embodiment of the map of FIG. 2 including an optimal route to the destination in response to the adverse condition;

FIG. 4 is a schematic diagram illustrating one exemplary embodiment of a map including a plurality of routes to a destination in response to an adverse condition having sub-areas indicating the severity of the adverse condition; and

FIG. 5 is a flow diagram of one exemplary embodiment of a method for routing a vehicle to its destination in response to an adverse condition.

### DETAILED DESCRIPTION

The following detailed description is merely exemplary in nature and is not intended to limit the invention or the application and uses of the invention. Furthermore, there is no intention to be bound by any theory presented in the preceding background or the following detailed description.

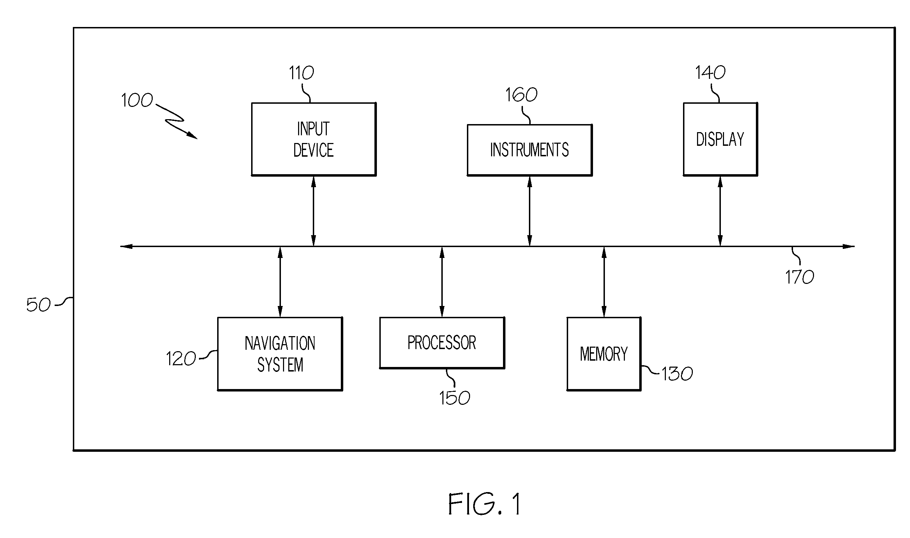

FIG. 1 is a block diagram of one exemplary embodiment of a system 100 for routing a vehicle 50 (e.g., an aircraft, a ship, a motor vehicle, etc.) in response to an adverse condition. System 100 comprises an input device 110, a navigation system 120, memory 130, a display 140, a processor 150, and one or more instruments 160 (e.g., radar, a datalink to a base station, etc.) coupled to one another via a bus 170 (e.g., a wired and/or wireless bus).

Input device 110 may be any device and/or hardware capable of enabling a user (e.g., pilot, driver, captain, air traffic controller, etc.) of vehicle 50 to input his/her present location and/or destination. Examples, of input device 110 include, but are not limited to, a keyboard, a mouse, a microphone, a touch pad, touch screen, and the like input devices.

Navigation system 120 may be any device and/or hardware capable of determining present vehicle geographic location, determining a vehicle travel route from a starting point (e.g., present vehicle location) to a destination, and/or identifying various geographic locations proximate to the present vehicle location. In one embodiment, navigation system 120 is a global positioning system (GPS).

Furthermore, memory 130 may be any device and/or hardware capable of storing data. In one embodiment, memory 130 is configured to store data representing a map of various geographic locations (e.g., a map of a continent, country, state, county, city, waypoints, etc.) including one or more geographic landmarks (e.g., a mountain, lake, river, airport, city, canyon, etc.).

Display 140 may be any device and/or hardware capable of communicating (either visually and/or audibly) information to the user. In accordance with one embodiment, display 140 is configured to display at least a portion of the map (including the geographic landmarks) stored in memory 130 and/or other graphics commanded by processor 150.

Processor 150 is configured to receive input (via input device 110) from the user and/or from instruments 160 defining the area of an adverse condition (e.g., inclement weather, turbulence, traffic, rough seas, etc.) located between the present location of vehicle 50 and a destination. The input may also include one or more sub-areas within the adverse condition area distinguishing different areas of severity within the adverse condition area.

In one embodiment, processor 150 is configured to automatically determine a route from the present location of vehicle 50 to the destination to avoid the adverse condition. In another embodiment, processor 150 may be configured to determine a plurality of possible routes from the present location of vehicle 50 to the destination to avoid the adverse condition. Each determined route includes one or more waypoints representing the geographic locations on the map stored in memory 130. As is generally known, waypoints define the route along which vehicle 50 is to travel in reaching the destination.

In embodiments implemented on an aircraft, the determined routes may include one or more 3-dimensional routes based on two-dimensional waypoints. That is, processor 150 may determine two or more routes having the same 2-dimensional waypoints, but each route including a different altitude. For example, a first route may include an altitude of 31,000 feet and the second route includes an altitude of 39,000 feet.

In calculating the route(s), processor 150 is configured to identify each relevant waypoint between the present location of vehicle 50 and the destination. A waypoint is relevant if the waypoint is within a pre-determined distance of the route along which vehicle 50 was originally scheduled to travel.

Processor 150, in one embodiment, is configured to eliminate each determined route that includes a waypoint within the area of the adverse condition so that each remaining route does not include a waypoint within the adverse condition. In another embodiment, processor 150 is configured to rank each determined route based on pre-determined, weighted constraints. Examples of constraints for ranking the routes include, but are not limited to, the severity of the adverse condition proximate a waypoint, the shortest distance from the present location to the destination, the shortest time to reach the destination, the least amount of fuel consumption, altitude considerations for aircraft, and/or the like constraints. Processor 150 is also configured to recognize that the optimal route may include one or more waypoints within the area of the adverse condition provided that the severity constraint of the adverse condition is less than one or more of the other constraints.

In yet another embodiment, processor 150 is configured to determine an optimal route along which vehicle 50 should travel to avoid the adverse condition. The optimal route may be the route that receives the highest rank based on the constraints; however, the user may be able to override system 100 and choose another optimal route.

Processor 150 may also be configured to receive information related to the adverse condition from one or more instruments 160 that tracks the change of position, size, and/or severity of, for example, adverse weather patches. Furthermore, processor 150 may be configured to predict the future position, size, and/or severity of the adverse condition and determine the route(s), rankings, and/or optimal route based on the predicted position, size, and/or severity of the adverse condition. To accomplish such, processor 150 is configured to estimate the time at which vehicle 50 will traverse each waypoint along each route and eliminate each route that includes a waypoint within the adverse weather condition.

For example, a route including a waypoint that is not presently within the area of an adverse weather condition in motion may be eliminated from consideration because the waypoint would be within the area of the adverse weather condition when vehicle 50 is determined to traverse the waypoint. That is, a route including a waypoint that is currently within the area of the adverse condition may still be a possible route if the movement, size, and/or severity of the adverse condition changes such that the waypoint is no longer within the area of the adverse condition when vehicle 50 is predicted to traverse the waypoint. Likewise, a route including a waypoint that is not currently within the area of the adverse condition may be eliminated as a possible route if the movement, size, and/or severity of the adverse condition changes such that the waypoint will be within the area of the adverse condition when vehicle 50 is predicted to traverse the waypoint.

After one or more routes are determined, processor 150 is configured to command display 140 to present a map including a representation of the determined route(s) to the destination. In one embodiment, processor 150 is configured to command display 140 to display each of the determined routes. Processor 150, in another embodiment, is configured to command display 140 to display a sub-set of the determined routes. In still another embodiment, processor 150 is configured to command display 140 to display the optimal route.

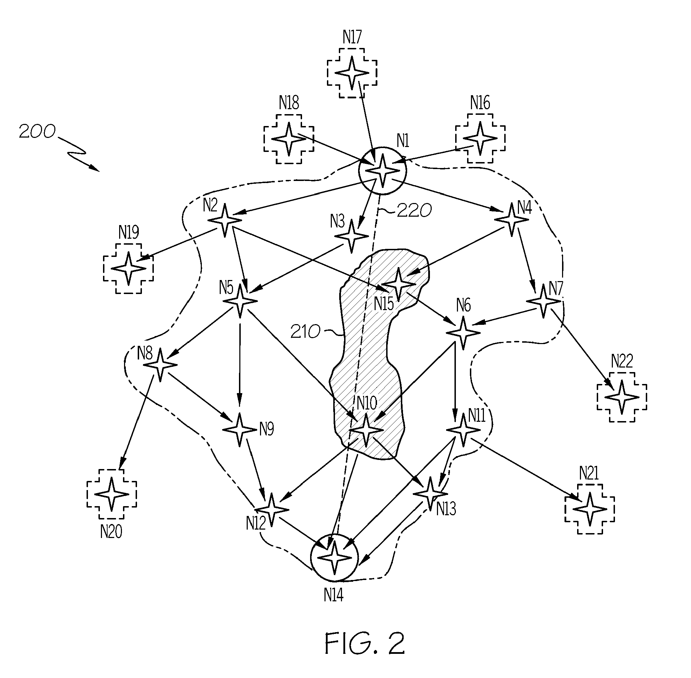

FIG. 2 is a schematic diagram illustrating one exemplary embodiment of a map 200 including a plurality of routes from the present location (e.g., waypoint N1) to a destination (e.g., waypoint N14) in response to an adverse condition. Map 200 comprises 22 waypoints (i.e., waypoints N1-N22), area 210 representing the adverse condition, and a plurality of rays connecting waypoints N1-N22 to one another to form the possible routes to waypoint N14.

In this example, processor 150 has eliminated waypoints N16-N22 from consideration because each of waypoints N16-N22 are greater than a pre-determined distance from the original route 220 of vehicle 50. That is, processor 150 does not consider a route including any one of waypoints N16-N22 as a possible route.

Next, processor 150 determines each of the possible routes from the present location (e.g., waypoint N1) to waypoint N14. In one embodiment, processor 150 determines a normalized pathset of waypoints N1-N15. In this example, the pathset includes:
- P1:: {N1, N2, N5, N8, N9, N12, N14};
- P2:: {N5, N9};
- P3:: {N5, N10, N12};
- P4:: {N10, N14};
- P5:: {N10, N13, N14};
- P6:: {N2, N15, N6, N10};
- P7:: {N6, N11, N14};
- P8:: {N11, N13, N14};
- P9:: {N1, N3, N5};
- P10:: {N1, N4, N15}; and
- P11:: {N4, N7, N6}.

After the pathset is determined, processor 150 determines each of the possible routes from waypoint N1 to waypoint N14 based on the normalized pathsets. In this example, the possible routes include:
- ROUTE 1:: {N1, N2, N5, N8, N9, N12, N14};
- ROUTE 2:: {N1, N2, N5, N9, N12, N14};
- ROUTE 3:: {N1, N2, N5, N10, N12, N14};
- ROUTE 4:: {N1, N2, N5, N10, N14};
- ROUTE 5:: {N1, N2, N5, N10, N13, N14};
- ROUTE 6:: {N1, N2, N15, N6, N10, N12, N14};
- ROUTE 7:: {N1, N2, N15, N6, N10, N14};
- ROUTE 8:: {N1, N2, N15, N6, N10, N13, N14};
- ROUTE 9:: {N1, N2, N15, N6, N11, N14};
- ROUTE 10:: {N1, N2, N15, N6, N11, N13, N14};
- ROUTE 11:: {N1, N3, N5, N8, N9, N12, N14};
- ROUTE 12:: {N1, N3, N5, N9, N12, N14};
- ROUTE 13:: {N1, N3, N5, N10, N12, N14};
- ROUTE 14:: {N1, N3, N5, N10, N14};
- ROUTE 15:: {N1, N3, N5, N10, N13, N14};
- ROUTE 16:: {N1, N4, N15, N6, N10, N12, N14};
- ROUTE 17:: {N1, N4, N15, N6, N10, N14};
- ROUTE 18:: {N1, N4, N15, N6, N10, N13, N14};
- ROUTE 19:: {N1, N4, N15, N6, N11, N14};
- ROUTE 20:: {N1, N4, N15, N6, N11, N13, N14};
- ROUTE 21:: {N1, N4, N7, N6, N10, N12, N14};
- ROUTE 22:: {N1, N4, N7, N6, N10, N14};
- ROUTE 23:: {N1, N4, N7, N6, N10, N13, N14};
- ROUTE 24:: {N1, N4, N7, N6, N11, N14}; and
- ROUTE 25:: {N1, N4, N7, N6, N11, N13, N14}.

After each of routes 1-25 are determined, processor 150 eliminates each route that includes a waypoint within area 210 (e.g., waypoints N10 and N15) and presents (e.g., via display 140) the remaining routes to the user. In this example, routes 3-7 and 10-16 are eliminated from consideration because each of routes 3-10 and 16-22 includes waypoint N10 and/or N15. Thus, routes 1-2, 11-15, and 23-25 are possible routes because each of these routes does not include a waypoint within area 210.

Map 200 may also present each determined optimal route in, for example, a different color or some other visual cue that distinguishes the optimal route from other routes. Map 200 may also present each route in, for example, a different color or some other visual cue that distinguishes each route from one another. In addition, map 200 may include an indication that a route has one or more altitudes at which the route could be traversed by an aircraft.

Although FIG. 2 shows that map 200 includes waypoints N1-N22, map 200 may omit waypoints N10, N15, and/or N16-N22 from being displayed. That is, map 200 may be limited to display a sub-set of waypoints N1-N22 based upon relevancy or some other pre-determined factor. Furthermore, map 200 may not display one or more routes and/or rays that have been eliminated because their respective waypoint(s) are deemed not relevant and/or are within area 210.

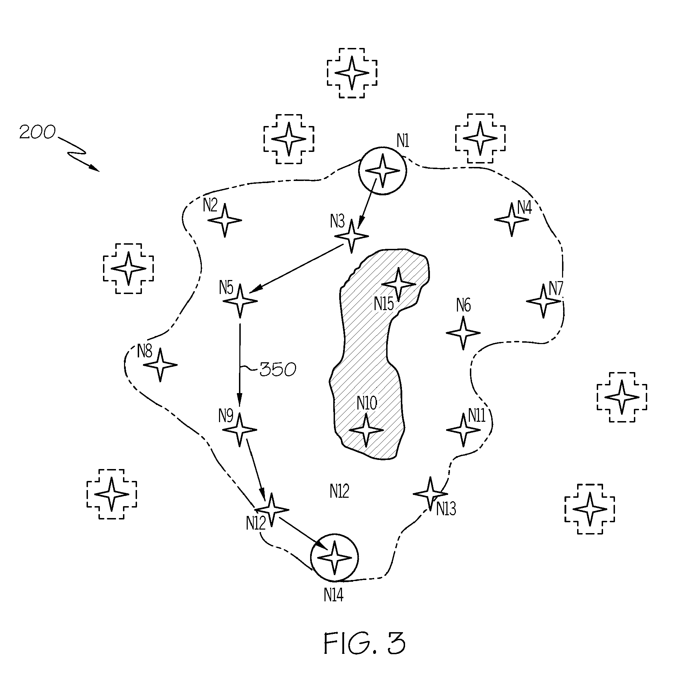

FIG. 3 is a schematic diagram illustrating another exemplary embodiment of map 200 presenting an optimal route 350 to waypoint N14 (i.e., the destination) in response to adverse condition area 210. In this embodiment, processor 150 has determined (based upon one or more pre-determined constraints) that route 12 (see above) is optimal route 350. Here, vehicle 50 is scheduled to travel from waypoint N1 (i.e., its present position) to waypoint N14 via waypoints N3, N5, N9, and N12 to navigate around adverse condition area 210.

Although FIG. 3 shows that map 200 includes each of waypoints N1-N22, map 200 may omit waypoints N10, N15, and/or N16-N22 from being displayed. That is, map 200 may be limited to display a sub-set of waypoints N1-N22 based upon relevancy or some other pre-determined factor.

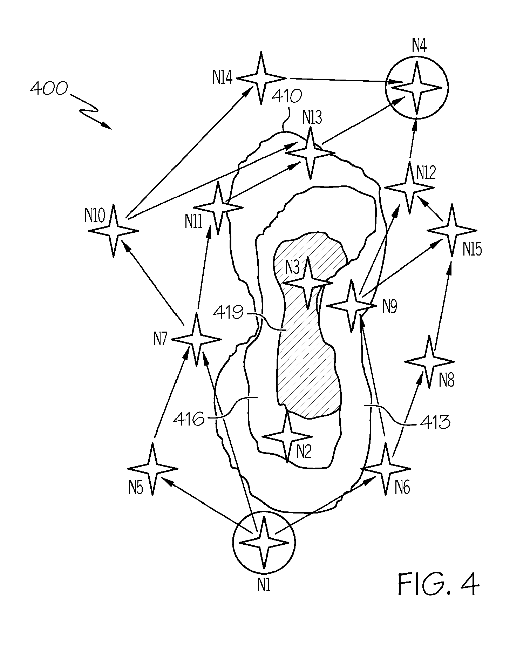

FIG. 4 is a schematic diagram illustrating one exemplary embodiment of a map 400 including a plurality of routes from the present location (e.g., waypoint N1) to a destination (e.g., waypoint N4) in response to an adverse condition area 410 having sub-areas (e.g., sub-areas 413, 416, and 419) indicating the severity of the adverse condition being presented on a display (e.g., display 140). Map 400 includes waypoints N1-N15 similar to map 200 (see FIG. 2) for defining the plurality of routes.

As illustrated in FIG. 4, waypoints N2, N3, N9, and N13 are included within adverse condition area 410. Specifically, waypoints N9 and N13 are within a least severe region (e.g., sub-area 413), waypoint N2 is within an intermediate severity region (e.g., sub-area 416), and waypoint N3 is within a most severe region (e.g., sub-area 419) of adverse condition area 410.

In one embodiment, processor 150 may determine which route(s) to display and/or an optimal route based on the weight of the various constraints. Specifically, processor 150 may present (via display 140) routes that traverse one or more of sub-areas 413, 416, and 419 to a user. That is, possible routes and/or an optimal route may traverse a sub-area of adverse condition area 410 if the constraints are weighted such that traversing a route traversing a sub-area of adverse condition area 410 is preferable to traversing a route that, for example, is a greater distance, consumes more fuel, takes more time to traverse, and/or the like constraints.

For example, traveling the route from waypoint N1 directly to waypoint N7 may be preferable over traveling the route along waypoints N1, N5 and N7 even though the direct route from waypoint N1 to waypoint N7 traverses sub-area 413. Similarly, it may be preferable to travel a first route including waypoints N1, N6, N9, N12, and N4 instead of a second route including waypoints N1, N5, N7, N10, N14, and N4 even though the first route traverses sub-area 413 twice, whereas the second route does not traverse any portion of adverse condition area 410, but is a greater distance or is likely to consume more time and/or fuel.

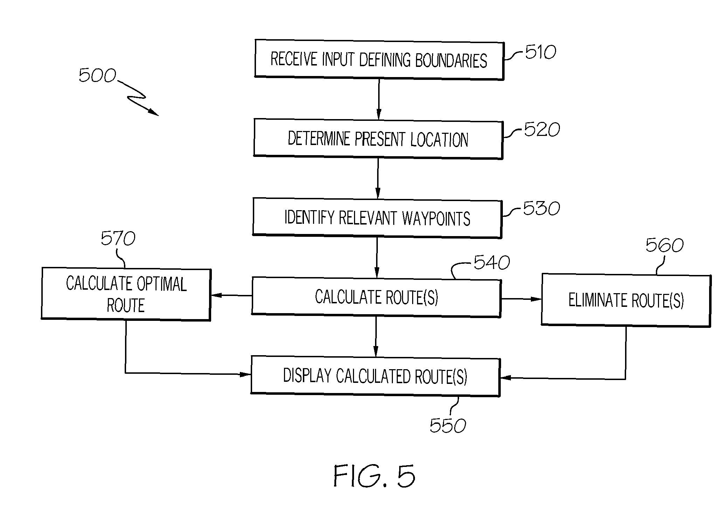

FIG. 5 is a flow diagram of one exemplary embodiment of a method 500 for routing a vehicle (e.g., vehicle 50) to its destination in response to an adverse condition (e.g., adverse condition areas 210 and 410). Method 500 begins by a processor (e.g., processor 150) receiving input defining the boundaries of the adverse condition (step 510). The input may be received from a user via an input device (e.g., input device 110) or from one or more instruments (e.g., instrument 160).

With the boundaries defined, the present location of the vehicle is determined (step 520). The processor may determine the present location or the processor may receive the present location of the vehicle from a navigation system (e.g., navigation system 120).

The processor also identifies relevant waypoints between the determined present location and the destination (step 530). A waypoint is relevant if the waypoint is within a pre-determined distance of the route along which the vehicle was originally scheduled to travel.

Next, the processor determines one or more routes from the present location to the destination based on the determined relevant waypoints (step 540). In one embodiment, the processor determines all of the possible routes.

In one embodiment, the processor then commands a display (e.g., display 140) to display at least one determined route (step 550), which may include displaying each of the determined routes. The processor, in another embodiment, eliminates each route that includes a waypoint within the boundary of the adverse condition (step 560) and commands the display to display one or more determined routes not having a waypoint within the boundaries of the adverse condition (step 550).

In yet another embodiment, the processor may determine an optimal route to the destination (step 570) and command the display to display the determined optimal route (step 550). The optimal route may be based on one or more pre-determined, weighted constraints. Furthermore, the optimal route may not include a waypoint within the boundary of the adverse condition, whereas in other embodiments the optimal route may include one or more waypoints within the boundary of the adverse condition.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A computer-implemented method for routing a vehicle to its destination in response to an adverse condition, the method comprising the steps of:
defining a boundary of the adverse condition;
identifying a plurality of reference points between a present location of the vehicle and the destination;
automatically generating a plurality of routes from the present location to the destination, each of the plurality of routes including one of the plurality of reference points; and
providing a first route of the plurality of routes to a user.

2. The computer-implemented method of claim 1, further comprising the steps of:
eliminating each of the plurality of routes that include a reference point within the boundary of the adverse condition; and
providing each of the plurality of routes that do not include a reference point within the boundary of the adverse condition to the user.

3. The computer-implemented method of claim 1, wherein the first route does not include a reference point within the boundary of the adverse condition, and wherein the providing step comprises the step of providing a second route not including a reference point within the boundary of the adverse condition to the user.

4. The computer-implemented method of claim 3, further comprising the steps of:
comparing the first route and the second route to at least one pre-determined constraint;
ranking the first route and the second route based on the comparison; and
providing the rankings of the first route and the second route to the user.

5. A system for routing a vehicle to its destination in response to an adverse condition, comprising:
means for defining a boundary of the adverse condition;
means for identifying a plurality of reference points between a present location of the vehicle and the destination;
means for automatically generating a plurality of routes from the present location to the destination, each of the plurality of routes including a first reference point; and
means for providing a first route of the plurality of routes to a user, wherein the first route does not include a second reference point within the boundary of the adverse condition.

6. The system of claim 5, further comprising:
means for eliminating each of the plurality of routes including a reference point within the boundary of the adverse condition; and
means for providing each of the plurality of routes not including a reference point within the boundary of the adverse condition to the user.

7. The system of claim 6, wherein the providing means comprises means for providing a second route of the plurality of routes not including a reference point within the boundary of the adverse condition to the user.

8. The system of claim 7, further comprising:
means for comparing the first route and the second route to at least one pre-determined constraint;
means for ranking the first route and the second route based on the comparison; and
means for providing the rankings of the first route and the second route to the user.

9. A computer-readable medium having stored thereon a sequence of instructions which, when executed by a computing device, cause the computing device to perform a method comprising the steps of:
defining a boundary of an adverse condition;
identifying a plurality of reference points between a present location of a vehicle and a destination for the vehicle;
automatically generating a plurality of routes from the present location to the destination, each of the plurality of routes including a reference point; and
displaying a first route of the plurality of routes to a user.

10. The computer-readable medium of claim 9, further comprising instructions that cause the computing device to perform the steps of:
eliminating each of the plurality of routes including a reference point within the boundary of the adverse condition; and
displaying each of the plurality of routes not including a reference point within the boundary of the adverse condition to the user, wherein:
the first route does not include a reference point within the boundary of the adverse condition, and
the instructions causing the computing device to perform the providing step comprise instructions causing the computing device to perform the step of providing a second route not including a reference point within the boundary of the adverse condition to the user.
